# EUROPÄISCHE PATENTANMELDUNG

(11) **EP 1 253 040 A2**
(43) Veröffentlichungstag der Anmeldung: **30.10.2002**
(21) Anmeldenummer: 02008896.9
(22) Anmeldetag: 20.04.2002
(51) Int. Cl.: B60K 23/08

(54) **Verfahren und Einrichtung zur automatischen Betätigung von Differentialsperren bei allradgetriebenen Fahrzeugen**

(30) Priorität: 25.04.2001 DE 10120221
(71) Anmelder: ZF FRIEDRICHSHAFEN Aktiengesellschaft, 88038 Friedrichshafen (DE)
(72) Erfinder: Burkhart, Hugo, 88213 Ravensburg (DE)

(57) **Zusammenfassung**

Bei dem Verfahren zur automatischen Betätigung von Differentialsperren werden Sperrkupplungen (3) für die Differentiale (4) erst wieder geöffnet, wenn sich der Lastzustand em Eingang des Getriebes (2) des Fahrzeuges wesentlich ändert, insbesondere absinkt und/oder das Fahrzeug stark beschleunigt.

## Beschreibung

Die vorliegende Erfindung bezieht sich auf ein Verfahren und eine Einrichtung zur automatischen Betätigung von Differentialsperren bei allradgetriebenen Fahrzeugen.

Differentiale von allradgetriebenen Fahrzeugen werden über lastschaltbare Sperrkupplungen aktiviert, wobei diese Sperrkupplungen automatisch anhand von Fahrparametern des Fahrzeuges zum Sperren des Differentials eingerückt bzw. zum Öffnen oder Ausschalten der Differentialsperre ausgerückt werden.

Aus der DE-A1 197 49 919 ist ein solches Verfahren bekannt. Hierbei werden im Rahmen einer Schlupfkontrolle die Drehzahlen der beiden Ausgangswellen des Differentials miteinander verglichen, wobei aus diesem Vergleich Schlupfsignale gebildet werden, die, sobald sie einen Schwellenwert überschreiten, das Einrücken der Sperrkupplung des jeweiligen Differentiales einleiten.

Bei diesem bekannten Verfahren wird zusätzlich der Lenkeinschlag der gelenkten Räder berücksichtigt, da dieser bei einer Schlupfregelung zur Sperrung eines Differentiales zur Unzeit führen kann, was natürlich das Lenken stark behindert und zu unnötigen Verspannungen im Antriebsstrang führt. Dieser Lenkeinschlag ist entweder der Lenkwinkel eines Fahrzeuges mit Achsschenkellenkung oder der Knickwinkel eines Fahrzeuges mit Knicklenkung.

Bei automatischen Differentialsperren muss Sorge dafür getragen werden, dass diese nicht zu lange eingeschaltet verbleiben, da dadurch das Fahrverhalten und insbesondere auch Lenkverhalten des Fahrzeuges negativ beeinflusst wird. Zum automatisierten Ausschalten der Differentialsperren werden daher die lastschaltbaren Sperrkupplungen nach einer gewissen Zeit versuchsweise geöffnet, wonach die erwähnte Schlupfkontrolle tätig wird. Dies kann zu kritischen Fahrzuständen führen, da bei der versuchsweisen Öffnung der Sperrkupplungen natürlich Traktion verloren geht.

Aus der EP-B1-0424932 ist es bekannt, zum Ausschalten der Differentialsperre, d. h. zum Ausrücken der Sperrkupplung, das Verhältnis der an zwei Getriebewellen auftretenden Drehmomente als Kennwert zu verwenden und diesen laufend ermittelten Ist-Kennwert mit einem durch die Getriebeübersetzung bestimmten Momentenverhältnis als Soll-Kennwert zu vergleichen. Aufgrund dieses Vergleiches wird eine weitere Stellvorrichtung zur Änderung der Drehmomentbelastung des An- und/oder Abtriebsstranges in Abhängigkeit von der Abweichung verwendet. Mit dieser Stellvorrichtung werden die für das Lösen der Sperrkupplung erforderlichen Schaltbedingungen erfüllt, sodass nach Erreichen dieser Schaltbedingung die Sperrkupplung ausgerückt und damit die Differentialsperre geöffnet bzw. ausgeschaltet wird.

Aus der EP-A2-0410441 ist ein Ausgleichsgetriebe für Kraftfahrzeuge bekannt, bei dem aufgrund von Fahrparametern eine Differentialsperre ein- und ausschaltbar ist. Für das Schalten der Differentialsperre werden Betriebsdaten des Kraftfahrzeuges einem Steuergerät zugeführt, und zwar insbesondere Drehzahlen von mindestens zwei Antriebswellen. Um das Ausschalten der Differentialsperren zu ermöglichen, ohne nach einer Sperre - wie oben erwähnt - die zugehörige Sperrkupplung zur Messung von Drehzahldifferenzen immer wieder lösen zu müssen, wird dort vorgeschlagen, an den Wellen Sensoren zur laufenden Drehmomenterfassung anzuordnen. In einem Steuergerät sind Zustandsgrößen gespeichert, insbesondere ein der Stellung des Gashebels zugeordneter Wert und ein dem gewählten Getriebegang des Fahrzeugs zugeordneter Drehmomentwert sowie ferner das Verhältnis zweier Drehmomente zum Ausschalten der Differentialsperre. Durch Vergleich dieser gespeicherten Werte mit den aktuellen Werten kann das Ein- und Ausschalten der Differentialsperre den jeweiligen Fahrzuständen des Fahrzeugs besser angepasst werden.

Der Erfindung liegt die Aufgabe zugrunde, ein Verfahren für das Ausschalten der Differentialsperre anzugeben, das mit einfachen Parametern arbeitet und den Fahrzustand des Fahrzeuges gerade in kritischen Situationen nicht ungünstig beeinflusst.

Diese Aufgabe ist gemäß der Erfindung durch die Merkmale des Patentanspruches 1 gelöst.

Demgemäß wird nach Einschalten einer Differentialsperre diese erst geöffnet bzw. vollständig ausgeschaltet, wenn sich der Lastzustand am Eingang des Getriebes des Fahrzeuges wesentlich ändert und/oder das Fahrzeug stark beschleunigt. Als Änderung des Lastzustandes wird das Kriterium gewählt, dass die Last am Getriebeeingang im wesentlichen absinkt.

Vorzugsweise wird die Differentialsperre aufgehoben, sobald eine Grenzdrehzahl innerhalb des Antriebsstranges, z. B. am Differential, am Motor, etc. überschritten wird. Ab diesem Moment tritt wieder die automatische Steuerung der Sperrkupplungen ein, z. B. eine Steuerung mit Hilfe einer Schlupfkontrolle.

Die für die Steuerung der Sperrkupplungen gemäß der Erfindung gewählten Parameter sind sehr einfach und an die Praxis angepasst. Man kann nämlich davon ausgehen, dass der Fahrer eines allradgetriebenen Fahrzeuges in kritischen Bedingungen, wo eine Differentialsperre benötigt wird, mindestens so lange unter Volllast, d. h. mit Vollgas fährt, bis die Fahrbahnzustände wiederum ein Fahren ohne Differentialsperre zulassen. Wenn er demnach vom Gas geht, d. h. den Lastzustand am Getriebeeingang verringert, ist es wahrscheinlich, dass sich der Fahrzustand des Fahrzeuges so weit verbessert hat, dass ein Fahren ohne Differentialsperre möglich ist. Wenn separat hiervon oder zudem das Fahrzeug stark beschleunigt wird, so kann davon ausgegangen werden, dass bei diesem Fahrzustand ebenfalls eine Differentialsperre nicht mehr benötigt wird: hier kann davon ausgegangen werden, dass das Fahrzeug nunmehr festen Boden erreicht hat und entsprechend beschleunigen kann.

Das angegebene Verfahren eignet sich nicht nur für allradgetriebene Fahrzeuge mit Achsschenkellenkung, sondern auch für allradgetriebene knickgelenkte Fahrzeuge.

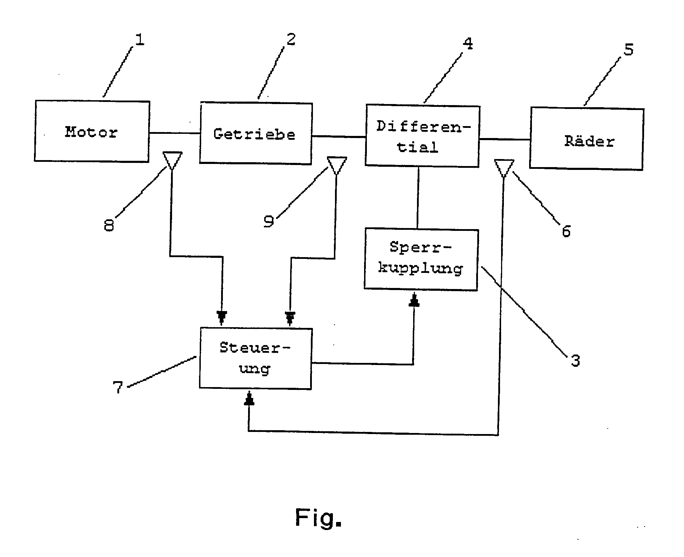

Die Erfindung ist in einem Ausführungsbeispiel anhand der Zeichnung näher erläutert. In der einzigen Figur ist ein Blockschaltdiagramm für eine Schaltung zur automatischen Betätigung einer Differentialsperre eines allradgetriebenen Fahrzeuges dargestellt.

In der Figur ist der Antriebsstrang eines allradgetriebenen Fahrzeuges aus Motor 1, Getriebe 2, Sperrkupplung 3, Differential 4 und angetriebenen Rädern 5 dargestellt.

An den Antriebswellen der Räder 5 sind schematisch dargestellte Sensoren 6 vorgesehen, deren Messsignale einer Steuerung 7 zugeführt werden. Aus den Signalen der Sensoren 6 werden Schlupfsignale berechnet, wobei dann in herkömmlicher Weise über die Steuerung 7 die Sperrkupplung betätigt wird, um gegebenenfalls eine Differentialsperre für die Räder einzurichten.

Des weiteren sind in dem Antriebsstrang Sensoren 8 und 9 vorgesehen: der Sensor 8 misst den Lastzustand am Eingang des Getriebes, der Sensor 9 die Geschwindigkeit des Fahrzeuges.

Die Signale beider Sensoren 8 und 9 werden der Steuerung 7 zugeführt. Diese ermittelt hieraus Steuersignale für den Lastzustand des Antriebsstranges am Getriebeeingang bzw. für die Beschleunigung des Fahrzeuges.

Sobald sich nach Einschalten der Differentialsperre der Lastzustand am Getriebeeingang wesentlich ändert und/oder das Fahrzeug stark beschleunigt, öffnet die Steuerung 7 die Sperrkupplung 3, sodass dann wiederum das Differential die Last auf beide Räder 5 in herkömmlicher Weise verteilt. Ab diesem Zeitpunkt tritt dann auch die Schlupfregelung aufgrund der Schlupfsignale der Sensoren 6 in Funktion.

Auch wenn hier nur der Antriebsstrang für ein Radpaar erläutert wurde, ist es klar, dass das Verfahren auch für Fahrzeuge mit mehreren angetriebenen Radpaaren gilt, ebenso wie für die Lastverteilung zwischen etwa Vorder- und Hinterrädern.

### Bezugszeichen

- 1: Motor
- 2: Getriebe
- 3: Sperrkupplung
- 4: Differential
- 5: Räder
- 6: Sensoren
- 7: Steuerung
- 8: Sensor
- 9: Sensor

## Patentansprüche

1. Verfahren zur automatischen Betätigung von Differentialsperren bei allradgetriebenen Fahrzeugen durch Steuerung von lastschaltbaren Sperrkupplungen für jedes Differential des mit einem Getriebe versehenen Fahrzeuges, wobei die Sperrkupplungen der Differentiale automatisch anhand von Fahrparametern des Fahrzeuges zum Sperren des Differentials eingerückt bzw. zum Öffnen bzw. Ausschalten der Differentialsperre ausgerückt werden, **dadurch gekennzeichnet,dass** die Differentialsperren erst geöffnet werden, wenn sich der Lastzustand am Eingang des Getriebes des Fahrzeuges wesentlich ändert und/oder das Fahrzeug stark beschleunigt.

2. Verfahren nach Anspruch 1, **dadurch gekennzeichnet,dass** die Differentialsperre geöffnet wird, wenn die Last am Getriebeeingang wesentlich absinkt.

3. Antriebsstrang für ein allradgetriebenes Fahrzeug mit einem Motor, einem Getriebe und einem durch zumindest eine Sperrkupplung ein- und ausschaltbarem Differential für Antriebsräder, wobei eine Steuerung zum Sperren und Freigeben des Differentials vorgesehen ist, **dadurch gekennzeichnet,dass** eine Sensoranordnung (8) zum Bestimmen des Lastmomentes am Getriebeeingang und/oder eine Sensoranordnung (9) zum Messen der Geschwindigkeit bzw. der Beschleunigung des Fahrzeuges vorgesehen ist, und dass die Steuerung (7) die Sperrkupplung (3) öffnet, wenn das Lastmoment am Eingang des Getriebeeinganges wesentlich absinkt und/oder das Fahrzeug stark beschleunigt.
